# EUROPEAN PATENT APPLICATION

(11) **EP 4 195 644 A1**
(43) Date of publication of application: **14.06.2023**
(21) Application number: 22209032.6
(22) Date of filing: 23.11.2022
(51) Int. Cl.: H04N 1/00, G06F 3/12, H04N 1/32

(54) **INFORMATION PROCESSING APPARATUS, INFORMATION PROCESSING METHOD, AND PROGRAM**

(30) Priority: 08.12.2021 JP 2021199600
(71) Applicant: FUJIFILM Corporation, Tokyo 106-8620 (JP)
(72) Inventor: MASUKO, Ryosuke, Yokohama, 220-8668 (JP)
(74) Representative: Meissner Bolte Partnerschaft mbB

(57) **Abstract**

An information processing apparatus includes a processor configured to, in a case where a function requiring setting of a destination to which data is to be transmitted has been selected by a user, display a first screen in a state in which the destination has not been set and display a second screen different from the first screen in a state in which the destination has been set.

## Description

### Background

### (i) Technical Field

The present disclosure relates to an information processing apparatus, an information processing method, and a program.

### (ii) Related Art

In Japanese Unexamined Patent Application Publication No. 2015-111426, an image transmission apparatus is disclosed. The image transmission apparatus includes an input device to which an operation by a user is input, a display device that displays information, a reading device that reads an image from a document, a communication device for performing communication, and transmission control means for controlling an image transmission operation for transmitting, using the communication device, the image read by the reading device from the document. The transmission control means causes a designated destination display screen for displaying an image transmission destination to be displayed on the display device, the image transmission destination being a destination for the image transmission operation and being currently designated. The designated destination display screen includes a button for displaying a destination designating screen for designating the image transmission destination on the display device. The destination designating screen includes an OK button for setting the image transmission destination. When the OK button is pressed on the destination designating screen displayed by pressing the button on the designated destination display screen, the transmission control means causes the designated destination display screen to be displayed again. When an instruction for starting the image transmission operation is input to the input device in a case where the image transmission destination is designated, the transmission control means starts the image transmission operation. When an instruction for starting the image transmission operation is input to the input device in a case where the image transmission destination is not designated, the transmission control means causes the destination designating screen to be displayed on the display device. When the OK button is pressed on the destination designating screen displayed when an instruction for starting the image transmission operation is input to the input device in a case where the image transmission destination is not designated, the transmission control means starts the image transmission operation.

In Japanese Unexamined Patent Application Publication No. 2015-121974, an information processing apparatus is disclosed. The information processing apparatus that processes and outputs printing setting information and printing data includes setting means for acquiring destination information to be used for facsimile transmission and setting a name including the destination information for a generated print queue, specifying means for specifying the print queue at the time of printing, and processing means for acquiring the destination information included in the name of the print queue specified by the specifying means, setting the acquired destination information for the printing setting information, and outputting the printing setting information together with the printing data.

In Japanese Unexamined Patent Application Publication No. 2016-134042, an image processing apparatus is disclosed.

The image processing apparatus includes communication means for performing wireless communication with a portable terminal apparatus, identification information acquiring means for performing, using the communication means, wireless communication with a portable terminal apparatus of a user who has logged into the image processing apparatus to acquire terminal apparatus identification information for identifying the portable terminal apparatus from the portable terminal apparatus and acquiring address identification information for identifying an address, the address identification information being associated with the address, from destination information registered in an address book of the portable terminal apparatus, storing means for storing, in association with the user, the terminal apparatus identification information and the address identification information that are acquired by the identification information acquiring means, display means for displaying the address identification information associated with the user who has logged into the image processing apparatus from among a plurality of pieces of address identification information stored in the storing means, selecting means for selecting, based on an operation performed by the user, any one of the plurality of pieces of address identification information displayed on the display means, address acquiring means for performing, using the communication means, wireless communication with a portable terminal apparatus including the terminal apparatus identification information stored in the storing means in association with the user to acquire at least an address corresponding to the address identification information selected by the selecting means from the address book of the portable terminal apparatus, destination setting means for setting the address acquired by the address acquiring means as a transmission destination for the user, and transmission means for transmitting data to the transmission destination set by the destination setting means.

### Summary

To use a function requiring setting of a destination to which data is to be transmitted, a screen for setting a destination may be displayed.

However, if such a screen for setting a destination is displayed even in a state in which a destination has already been set, a user needs to perform an operation for switching from the destination setting screen to another necessary screen.

Accordingly, it is an object of the present disclosure to provide an information processing apparatus, an information processing method, and a program that are capable of varying, depending on whether or not a destination has been set, a screen for a case where a function requiring setting of a destination has been selected by a user.

According to a first aspect of the present disclosure, there is provided an information processing apparatus including a processor configured to, in a case where a function requiring setting of a destination to which data is to be transmitted has been selected by a user, display a first screen in a state in which the destination has not been set and display a second screen different from the first screen in a state in which the destination has been set.

In the information processing apparatus according to a second aspect of the present disclosure, the first screen displayed in the state in which the destination has not been set may be a destination setting screen for setting the destination.

In the information processing apparatus according to a third aspect of the present disclosure, the state in which the destination has not been set may include a case where even if an operation for setting the destination has been performed by the user, the set destination is invalid.

In the information processing apparatus according to a fourth aspect of the present disclosure, the second screen displayed in the state in which the destination has been set may be a setting item screen on which a setting item for the function is able to be set.

In the information processing apparatus according to a fifth aspect of the present disclosure, the state in which the destination has been set may be a case where after the destination is set by the user using an address book in which the destination is stored, the function is selected.

In the information processing apparatus according to a sixth aspect of the present disclosure, the state in which the destination has been set may be a case where a history in which the function is used has been selected by the user.

In the information processing apparatus according to a seventh aspect of the present disclosure, by a time when the history in which the function is used is selected, the function has been selected.

According to an eighth aspect of the present disclosure, there is provided an information processing method including, in a case where a function requiring setting of a destination to which data is to be transmitted has been selected by a user, displaying a first screen in a state in which the destination has not been set and displaying a second screen different from the first screen in a state in which the destination has been set.

According to a ninth aspect of the present disclosure, there is provided a program causing a computer to execute a process including, in a case where a function requiring setting of a destination to which data is to be transmitted has been selected by a user, displaying a first screen in a state in which the destination has not been set and displaying a second screen different from the first screen in a state in which the destination has been set.

According to the first aspect of the present disclosure, an effect that a screen for a case where a function requiring setting of a destination has been selected by a user can be varied depending on whether or not a destination has been set, is achieved.

According to the second aspect of the present disclosure, an effect that a screen for setting a destination required to use a function can be displayed, is achieved.

According to the third aspect of the present disclosure, an effect that, in a case where a set destination is invalid, a screen for setting a destination can be displayed, is achieved.

According to the fourth aspect of the present disclosure, an effect that compared to a case where a screen for setting a destination, which is not necessarily required, is displayed, a troublesome operation by a user for switching to a setting item screen on which a setting item is able to be set can be omitted, is achieved.

According to the fifth aspect of the present disclosure, an effect that compared to a case where a screen for setting a destination is also displayed in a case where a destination has been set using an address book, a troublesome operation by a user for switching to a setting item screen on which a setting item is able to be set can be omitted, is achieved.

According to the sixth aspect of the present disclosure, an effect that compared to a case where a screen for setting a destination is also displayed in a case where a history in which a destination is set has been selected, a troublesome operation by a user for switching to a setting item screen on which a setting item is able to be set can be omitted, is achieved.

According to the seventh aspect of the present disclosure, an effect that compared to a case where a function requiring setting of a destination has not been selected even if a history is selected, a troublesome operation by a user for selecting a function requiring setting of a destination can be omitted, is achieved.

According to the eighth aspect of the present disclosure, an effect that a screen for a case where a function requiring setting of a destination has been selected by a user can be varied depending on whether or not a destination has been set, is achieved.

According to the ninth aspect of the present disclosure, a program that is capable of varying, depending on whether or not a destination has been set, a screen for a case where a function requiring setting of a destination has been selected by a user, can be provided.

### Brief Description of the Drawings

Exemplary embodiments of the present disclosure will be described in detail based on the following figures, wherein:
Fig. 1 is a schematic block diagram of an image forming apparatus according to an exemplary embodiment of the present disclosure;
Fig. 2 is a flowchart illustrating an example of a process performed by an information processing apparatus according to an exemplary embodiment of the present disclosure;
Fig. 3 is an explanatory diagram illustrating an example of a display screen displayed on a display unit on which icons for activating functions of the image forming apparatus are displayed in an exemplary embodiment of the present disclosure;
Fig. 4 is an explanatory diagram illustrating an example of a display screen displayed on the display unit on which an example of a destination setting screen is displayed in an exemplary embodiment of the present disclosure;
Fig. 5 is an explanatory diagram illustrating an example of a display screen displayed on the display unit on which an example of a list of histories is displayed in an exemplary embodiment of the present disclosure;
Fig. 6 is an explanatory diagram illustrating an example of a display screen displayed on the display unit on which an example of a setting item screen is displayed in an exemplary embodiment of the present disclosure;
Fig. 7 is an explanatory diagram illustrating an example of a display screen displayed on the display unit on which an example of an address book is displayed in an exemplary embodiment of the present disclosure; and
Fig. 8 is an explanatory diagram illustrating an example of a display screen on which an example of selection of a function requiring setting of a destination from the address book illustrated in Fig. 7 is displayed.

### Detailed Description

Exemplary embodiments of the present disclosure will be described below with reference to drawings. In the drawings, the same or equivalent component elements and parts are denoted by the same reference signs. Furthermore, for convenience of explanation, dimensional ratios in the drawings are exaggerated and may be different from actual ratios.

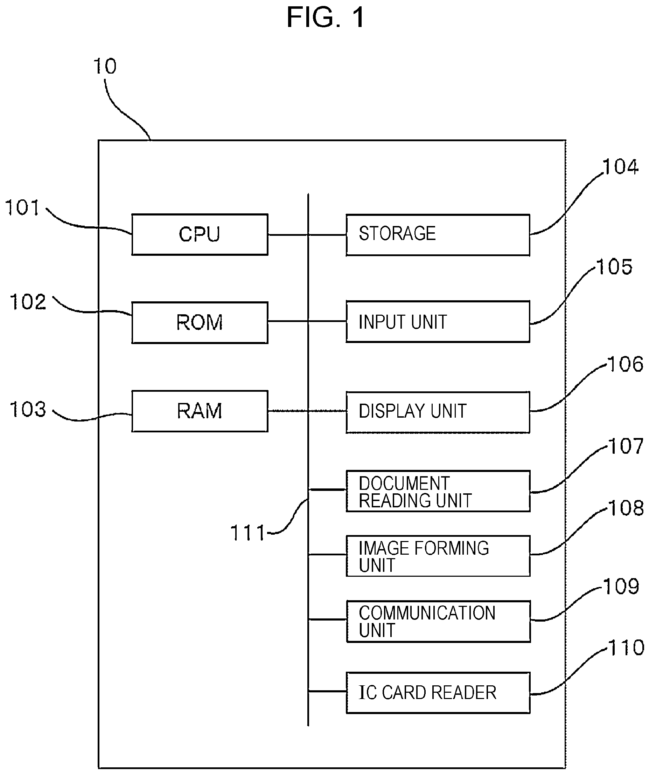

Fig. 1 is a block diagram illustrating a hardware configuration of an image forming apparatus 10 as an example of an information processing apparatus according to an exemplary embodiment.

The image forming apparatus 10 has various functions such as a copy function, a facsimile (FAX) function, and a scanner function. In this exemplary embodiment, the scanner function includes "scanner (transmission by email)" for transmitting a read image by email, "scanner (save into box)" for storing a read image into a box set in a storage 104 of the image forming apparatus 10, and "scanner (save into PC)" for storing a read image into a personal computer (PC) .

The information processing apparatus is not limited to the image forming apparatus 10.

As illustrated in Fig. 1, the image forming apparatus 10 includes a central processing unit (CPU) 101, which is an example of a processor, a read only memory (ROM) 102, a random access memory (RAM) 103, the storage 104, an input unit 105, a display unit 106, a document reading unit 107, an image forming unit 108, a communication unit 109, and an integrated circuit (IC) card reader 110. The component elements mentioned above are connected to one another via a bus 111 in such a manner that they are able to communicate with one another.

The CPU 101 is a central processing unit. The CPU 101 executes various programs and controls various units. That is, the CPU 101 reads a program from the ROM 102 or the storage 104 and executes the program using the RAM 103 as an operation area. The CPU 101 controls the component elements mentioned above and performs various types of arithmetic processing in accordance with the program recorded in the ROM 102 or the storage 104. In this exemplary embodiment, a program is stored in the ROM 102 or the storage 104.

Various programs and various data are stored in the ROM 102. A program or data is temporarily stored in the RAM 103 as an operation area. The storage 104 is a hard disk drive (HDD) or a solid state drive (SSD). Various programs including an operating system and various data are stored in the storage 104.

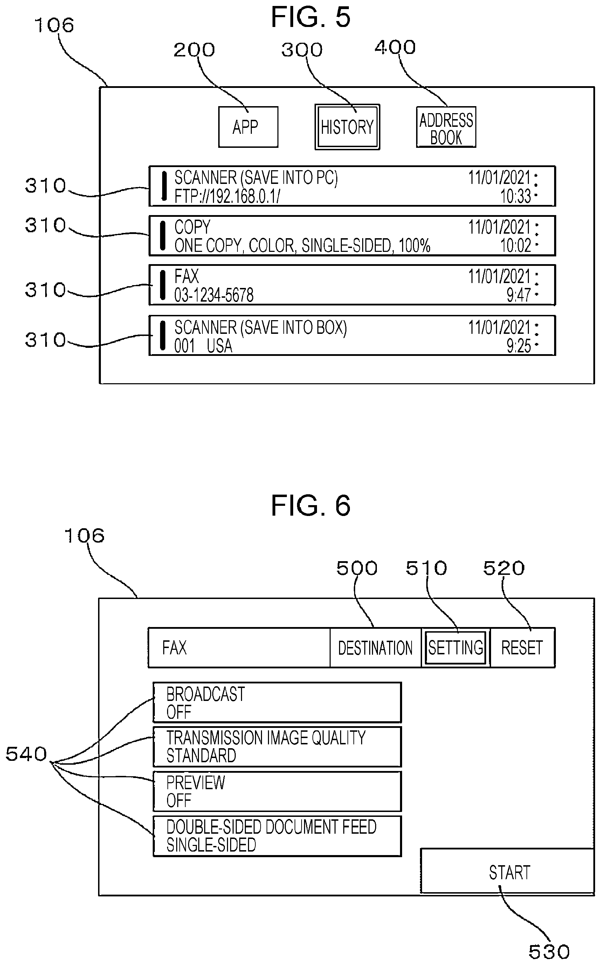

When a user performs processing of a function of the image forming apparatus 10, information about a setting item of the executed function is stored as a history into the storage 104. When a history icon 300, which will be described later, is selected by the user, a list of histories is displayed as history operators 310 on the display unit 106 (see Fig. 5). The history operators 310 are displayed for individual histories in which information about setting items of executed functions is stored. When a history operator 310 is selected by the user, a history corresponding to the history operator 310 is selected, and information about a setting item of a function executed in the history is thus selected. A predetermined number of histories, for example, twenty histories, are able to be stored. When the number of histories exceeds twenty, the oldest history is deleted. Information about a setting item to be set varies according to a function of the image forming apparatus 10 executed. In the case of the "copy" function, information about the number of copies, color mode, magnification, N-up, density, and the like is information about setting items to be set. In the case of the "FAX" function, information about destination, transmission image quality, preview ON/OFF, and the like is information about setting items to be set. In the case of the "scanner" function, information about destination, resolution, and the like is information about setting items to be set.

The input unit 105 includes a pointing device such as a mouse and a keyboard and is used for performing various inputs. As described later, the input unit 105 is used for setting setting information on a setting screen, executing a function, and the like. Furthermore, in this exemplary embodiment, the display unit 106 of a touch panel type functions as the input unit 105.

The display unit 106 is, for example, a liquid crystal display. The display unit 106 displays various types of information under control of the CPU 101. A specific display example will be described later. Furthermore, the display unit 106 is of a touch panel type and also function as the input unit 105.

The document reading unit 107 captures documents one by one that are placed on a paper feed table of an automatic feeding device, which is not illustrated in Fig. 1, provided in an upper part of the image forming apparatus 10 and acquires image information by optically reading the captured documents. Alternatively, the document reading unit 107 acquires image information by optically reading a document placed on a table such as platen glass.

Image information of a document read by the document reading unit 107 is stored in the storage 104 of the image forming apparatus 10, printed by the image forming unit 108, which will be described later, or transmitted, by the communication unit 109, which will be described later, to another image forming apparatus having a FAX function.

The image forming unit 108 forms an image on a recording medium such as paper, that is, prints the image. The image is based on image information obtained by reading by the document reading unit 107 or image information obtained from a PC or the like, which is not illustrated in Fig. 1, that is connected to the image forming apparatus 10 via a network.

The communication unit 109 connects the image forming apparatus 10 to a public line. The communication unit 109 transmits and receives image information obtained by reading by the document reading unit 107 to and from another image forming apparatus having a FAX function.

Furthermore, the communication unit 109 may communicate with other apparatuses such as a server apparatus, which is not illustrated in Fig. 1, in accordance with standards such as a public line, the Internet, intranet, Ethernet^{®}, FDDI, or Wi-Fi^{®}.

The IC card reader 110 reads information stored in an IC card, for example, a user ID. After the IC card reader 110 reads information stored in an IC card and identifies a user, functions of the image forming apparatus 10 are enabled to be executed. After a function of the image forming apparatus 10 is executed, executed processing is stored as a history for the user into the storage 104, as described above.

As a perquisite, an IC card in which a user ID or the like is stored as user information needs to be distributed to the user of the image forming apparatus 10.

A user is not necessarily identified by reading of an IC card by the IC card reader 110. A user who uses the image forming apparatus 10 may be identified by inputting of a user ID by the user using the input unit 105, without using the IC card reader 110. Alternatively, a plurality of pieces of user information may be registered in advance in the image forming apparatus 10, and a list of the plurality of pieces of registered user information may be called and displayed on the display unit 106. A user may be identified by selecting, by the user, user information of the user from the plurality of pieces of user information displayed on the display unit 106.

Furthermore, without identifying a user who uses the image forming apparatus 10, histories described later may be regarded as being common to all the users. That is, in the case where histories common to all the users are used and histories for individual users do not need to be stored, the IC card reader 110 or the like is not necessarily provided because a user who uses the image forming apparatus 10 does not need to be identified.

Next, operation of the image forming apparatus 10 will be described.

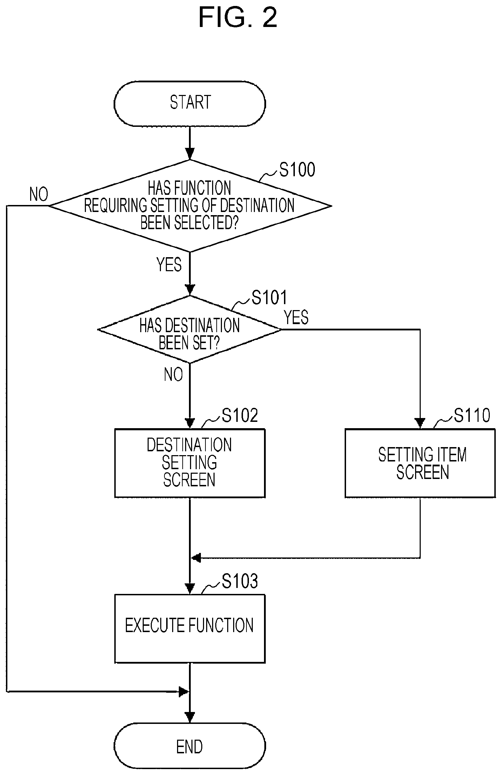

Fig. 2 is a flowchart illustrating an example of a process performed by the image forming apparatus 10 in a case where a function requiring setting of a destination is selected by a user.

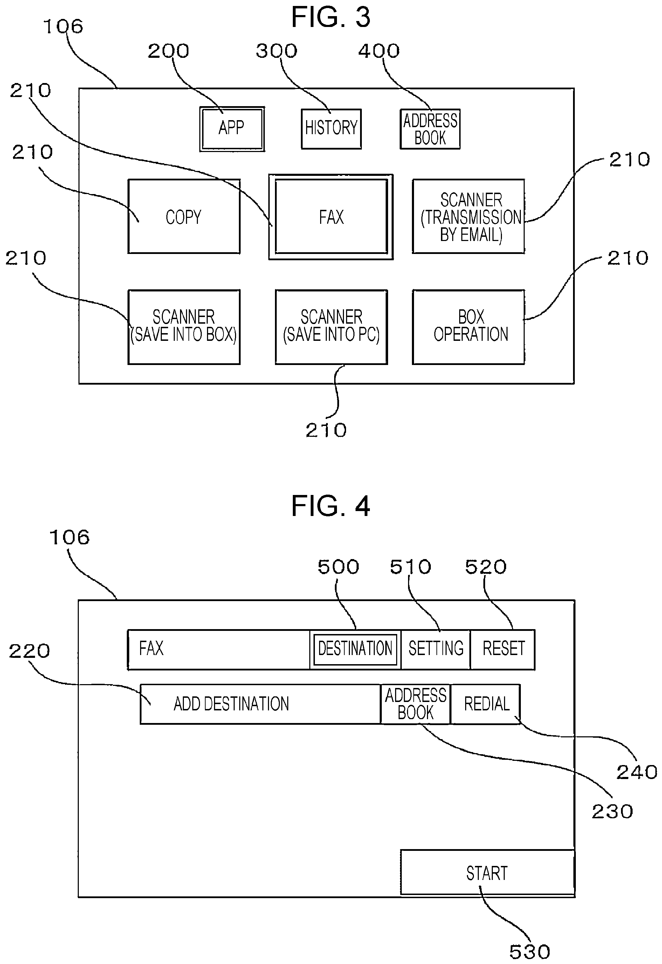

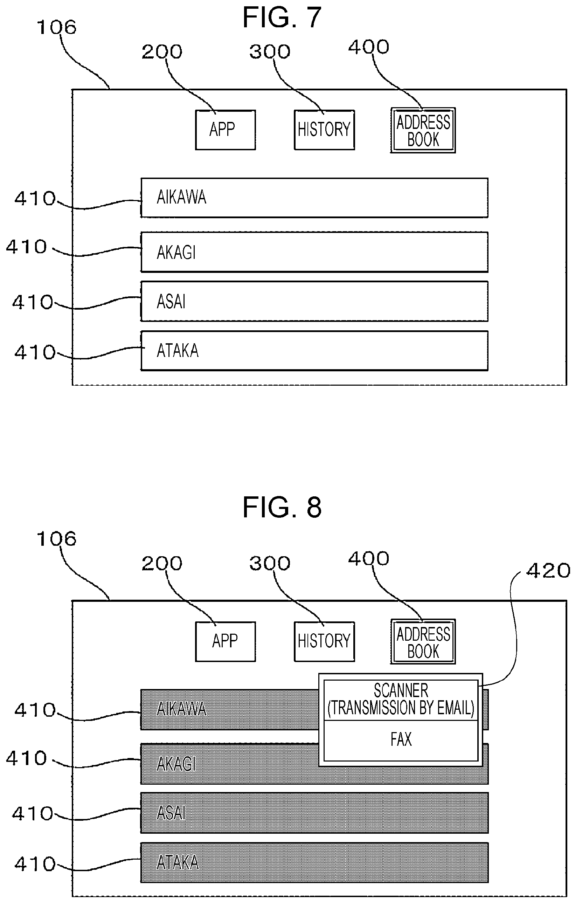

As illustrated in Fig. 2, in step S100, the CPU 101 of the image forming apparatus 10 determines whether or not a function requiring setting of a destination has been selected (tapped) by a user using the input unit 105 of the image forming apparatus 10. Specifically, a function requiring setting of a destination is a FAX function and a scanner function in this exemplary embodiment. Furthermore, selection (tapping) of such a function requiring setting of a destination by a user includes cases described below. That is, such selection (tapping) includes a case where an application icon 200 displayed on a display screen of the display unit 106 is selected and a function icon 210 is then selected from a displayed list of a plurality of function icons 210 (see Fig. 3), a case where a history icon 300 displayed on the display screen of the display unit 106 is selected and a history is then selected from a displayed list of a plurality of histories (see Fig. 5), and a case where an address book icon 400 displayed on the display screen of the display unit 106 is selected and an address is then selected from a displayed list of a plurality of addresses (see Fig. 7). In the case where it is determined that a function requiring setting of a destination has been selected, the process proceeds to step S101. In contrast, in the case where it is determined that a function requiring setting of a destination has not been selected, the process ends.

In step S101, the CPU 101 of the image forming apparatus 10 determines whether or not a destination has been set. In the case where it is determined that no destination has been set, the process proceeds to step S102.

In step S102, the CPU 101 of the image forming apparatus 10 causes a destination setting screen for setting a destination, which is an example of a first screen, to be displayed on the display unit 106. The first screen (destination setting screen) is one of initial screens displayed first when a function requiring setting of a destination is selected in step S100. Then, the process proceeds to step S103.

In step S103, the CPU 101 of the image forming apparatus 10 executes the function selected in step S100 under the condition that the user has selected a start switch 530. Then, the process ends.

In the case where it is determined in step S101 that a destination has been set, the process proceeds to step S110 in which the CPU 101 of the image forming apparatus 10 causes a setting item screen to be displayed on the display unit 106 (see Fig. 6). A second screen (setting item screen) is one of the initial screens displayed first when a function requiring setting of a destination is selected in step S100. Then, the process proceeds to step S103 described above.

In the case where it is determined in step S100 that no function requiring setting of a destination has been selected, the process ends. That is, in the case where a function not requiring setting of a destination has been selected, a screen corresponding to the function is displayed on the display unit 106.

A case where the application icon 200 displayed on the display screen of the display unit 106 is selected and a function is then selected from a displayed list of a plurality of functions will be described with reference to Figs. 3 and 4.

As illustrated in Fig. 3, when a user selects the application icon 200 displayed on the display screen of the display unit 106, function icons 210 for activating functions of the image forming apparatus 10 are displayed on the display screen of the display unit 106. Then, for example, when the user selects a function icon 210 for activating a FAX function, which is a function requiring setting of a destination, a destination setting screen for setting a destination is displayed, as illustrated in Fig. 4, because in this case no destination has been set. In this example, on the destination setting screen, a destination setting field 220 for setting a destination, in this example, a FAX number, is displayed. When the user selects (taps) the destination setting field 220, a keyboard (not illustrated in Fig. 3) is displayed, so that the user inputs a FAX number. Furthermore, on the destination setting screen, a FAX number may be set using an address book icon 230 or a redial icon 240. After a FAX number as a destination is set, when the start switch 530 is selected, the FAX function is executed. By executing the FAX function, the FAX number and information about a setting item, which will be described later, are stored as a history into the storage 104.

On the destination setting screen, a destination icon 500 for switching between the destination setting screen and the setting item screen and a setting item icon 510 are displayed. In Fig. 4, the destination icon 500 is indicated by a double line, which indicates that the destination setting screen is being displayed. Switching to the setting item screen, which will be described later with reference to Fig. 6, is enabled by selecting (tapping) the setting item icon 510. Furthermore, a reset switch 520 for resetting a destination and a setting item to initial settings is also displayed on the destination setting screen.

A case where the history icon 300 displayed on the display screen of the display unit 106 is selected and a history operator 310 is then selected from a displayed list of a plurality of history operators 310 will be described with reference to Figs. 5 and 6.

As illustrated in Fig. 5, when the user selects the history icon 300 displayed on the display screen of the display unit 106, a list of a plurality of history operators 310 is displayed on the display screen of the display unit 106. Then, when the user selects (taps) any one of the history operators 310, the setting item screen reflecting a setting item used in a corresponding history is displayed, as illustrated in Fig. 6, because in this case a destination has already been set. In this example, on the setting item screen, setting item operators 540 for setting broadcast, transmission image quality, preview, double-sided document feed, and the like are displayed. For example, to change, among the set setting items, the transmission image quality from "standard" stored in the history, the user may select the setting item operator 540 for the transmission image quality and change the transmission image quality from "standard" to another image quality such as "clear". Then, by operating the start switch 530 displayed in a lower right part of the display screen of the display unit 106, the "FAX" function is executed. By executing the "FAX" function, information about a setting item is stored as a new history into the storage 104. The same destination as that used in the history is set here. To change the destination or add a new destination, the destination icon 500 is selected so that switching to the destination setting screen (see Fig. 4) is performed. Furthermore, the reset switch 520 for resetting a destination and a setting item to initial settings is displayed on the setting item screen.

A case where the address book icon 400 displayed on the display screen of the display unit 106 is selected and an address is then selected from a displayed list of a plurality of addresses will be described with reference to Figs. 7 and 8.

As illustrated in Fig. 7, when the user selects the address book icon 400 displayed on the display screen of the display unit 106, a list of a plurality of addresses 410 is displayed on the display screen of the display unit 106. Then, when the user selects any one of the addresses 410, a function icon 420 for activating a function requiring setting of a destination is displayed superimposed on the selected address 410, as illustrated in Fig. 8.
Furthermore, in Fig. 8, the list of the addresses 410 is grayed out, so that the function icon 420 is able to be selected. The function icon 420 to be activated is displayed in association with information registered for an address. That is, a function icon 420 indicating "scanner (transmission by email)" is displayed in the case where an email address is registered, a function icon 420 indicating "scanner (save into box)" is displayed in the case where a box number is registered, and a function icon 420 "FAX" is displayed in the case where a FAX number is registered. For example, when the function icon 420 "FAX" is selected, because a destination has already been set in this case, a setting item screen on which a setting item is able to be set is displayed, as in Fig. 6 described above.

The above-described state in which a destination has not been set includes a state in which even if the user performs an operation for setting a destination, the set destination is invalid. That is, even in the case where, as an operation for setting a destination, an operation for setting a destination from an address book in which the destination is stored (see Fig. 7) or an operation for selecting a history (see Fig. 5), has been performed by the user, if the set destination is invalid, it is considered that no destination has been set. Thus, instead of the setting item screen, the destination setting screen is displayed as an initial screen. The state in which a set destination is invalid may be a case where error is found by grammar check when an email address registered in an address book is incorrect or when a grammar in a FAX number is incorrect, a case where a certificate is invalid when an S/MIME certificate has expired or when an electronic signature is invalid, a case where an address used in a history has been deleted, or the like.

The present disclosure is not limited to the exemplary embodiments described above and various changes and applications may be made without departing from the scope of the present disclosure.

In the exemplary embodiments described above, an aspect in which a program is stored (installed) in advance in a ROM or a storage has been described. However, the program is not necessarily stored in the ROM or the storage. The program may be recorded in a recording medium such as a compact disk read only memory (CD-ROM), a digital versatile disk read only memory (DVD-ROM), or a universal serial bus (USB) memory and provided. Furthermore, the program may be downloaded from an external apparatus via a network.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to:
in a case where a function requiring setting of a destination to which data is to be transmitted has been selected by a user, display a first screen in a state in which the destination has not been set and display a second screen different from the first screen in a state in which the destination has been set.

2. The information processing apparatus according to Claim 1, wherein the first screen displayed in the state in which the destination has not been set is a destination setting screen for setting the destination.

3. The information processing apparatus according to Claim 2, wherein the state in which the destination has not been set includes a case where even if an operation for setting the destination has been performed by the user, the set destination is invalid.

4. The information processing apparatus according to any one of Claims 1 to 3, wherein the second screen displayed in the state in which the destination has been set is a setting item screen on which a setting item for the function is able to be set.

5. The information processing apparatus according to Claim 4, wherein the state in which the destination has been set is a case where after the destination is set by the user using an address book in which the destination is stored, the function is selected.

6. The information processing apparatus according to Claim 4, wherein the state in which the destination has been set is a case where a history in which the function is used has been selected by the user.

7. The information processing apparatus according to Claim 6, wherein by a time when the history in which the function is used is selected, the function has been selected.

8. An information processing method comprising:
in a case where a function requiring setting of a destination to which data is to be transmitted has been selected by a user, displaying a first screen in a state in which the destination has not been set and displaying a second screen different from the first screen in a state in which the destination has been set.

9. A program causing a computer to execute a process comprising:
in a case where a function requiring setting of a destination to which data is to be transmitted has been selected by a user, displaying a first screen in a state in which the destination has not been set and displaying a second screen different from the first screen in a state in which the destination has been set.
